# EUROPÄISCHE PATENTANMELDUNG

(11) **EP 1 627 673 A1**
(43) Veröffentlichungstag der Anmeldung: **22.02.2006**
(21) Anmeldenummer: 05450136.6
(22) Anmeldetag: 11.08.2005
(51) Int. Cl.: B01D 21/00, B01D 43/00

(54) **Vorrichtung zur Abscheidung von dispergierten Partikeln**

(30) Priorität: 19.08.2004 AT 14022004
(71) Anmelder: Trampler Felix, Dipl.-Ing. Dr., 2371 Hinterbrühl (AT)
(72) Erfinder: Trampler Felix, Dipl.-Ing. Dr., 2371 Hinterbrühl (AT)
(74) Vertreter: Babeluk, Michael

(57) **Zusammenfassung**

Die Erfindung betrifft eine Vorrichtung zur Abscheidung von dispergierten Partikeln oder ähnlichen Teilchen (4), mit einem Abscheidebehälter (1), der mit mindestens einem Schallgeber (2) zur Erzeugung von Ultraschallwellen mit im Wesentlichen senkrecht verlaufenden Schwingungsknotenflächen versehen ist, einer Zuströmöffnung (3) für die Dispersion, einer Abströmöffnung (6) für das flüssige Medium und mit einer Abzugsöffnung (5) für die abgeschiedenen Teilchen (4). Eine wirksame Abscheidung kann dadurch erreicht werden, dass der Abscheidebehälter (1) eine Abscheidefläche (7, 8, 9) aufweist, die in Gebrauchsstellung in einem spitzen Winkel (α) zur Horizontalen geneigt ist.

## Beschreibung

Die Erfindung betrifft eine Vorrichtung gemäß dem Oberbegriff von Patentanspruch 1.

Im Sinn der Erfindung werden auch Teilchen mit umfasst, die an sich keine Partikel sind, sich aber in Hinblick auf die Abscheidung analog verhalten. Dies sind etwa Öltröpfchen in kolloidaler Form oder Gasbläschen.

Es ist bekannt, dass Festkörper aus Dispersionen durch Sedimentation abgeschieden werden können. Die Abscheiderate ist jedoch umso kleiner je geringer der Dichteunterschied der Feststoffteilchen im Vergleich zum flüssigen Medium ist und je kleiner die Teilchengröße ist. Aus der EP 0 400 115 A und aus der EP 0 633 049 A sind Verfahren bekannt, die Teilchen in der Dispersion durch Ultraschallwellen zu agglomerieren und dadurch eine höhere Abscheiderate zu erzielen. Abscheideverfahren dieser Art eignen zum Beispiel für Aufgabenstellungen in der Biotechnologie, wenn es darum geht, Zellen aus flüssigen Medien abzuscheiden. In diesem Bereich werden Vorrichtungen auch im Durchfluss betrieben, die eine Reinigungskammer aufweisen, in der eine zumeist stehende Ultraschallwelle ausgebildet ist, die die Feststoffteilchen durch Schwerkrafteinwirkung in der von unten nach oben strömenden Dispersion zurückhält und bis zur Sedimentationsfähigkeit verdichtet. Die Sedimentation erfolgt entgegen der Durchflussrichtung, wodurch insbesondere bei höheren Partikeldurchsätzen die Abscheideleistung nachteilig beeinflusst wird.

Weiters sind sogenannte Schrägplattenseperatoren bekannt, bei denen schräge Flächen dazu verwendet werden, die Sedimentation zu beschleunigen. Bei Teilchen mit kleinen Durchmessern und/oder bei geringen Dichteunterschieden sind solche Schrägplattenseperatoren jedoch nur beschränkt wirksam.

Aus der DE 42 30 482 A ist eine Vorrichtung zur Trennung von Dispersionen, insbesondere zur Trocknung von Dampfschwaden, beschrieben, die einen waagrecht liegenden Beschallungsraum aufweist. Auch diese Vorrichtung ist unter den oben beschriebenen ungünstigen Einsatzverhältnissen nicht wirksam.

Aufgabe der vorliegenden Erfindung ist es, eine Vorrichtung zu schaffen, die die obigen Nachteile vermeidet und eine gesteigerte Abscheideleistung erbringt.

Erfindungsgemäß werden diese Aufgaben durch eine Ausführung gemäß Patentanspruch 1 gelöst. Überraschenderweise hat sich durch die Kombination der Agglomeration durch das Ultraschallfeld mit der spezifischen Geometrie des Abscheidebehälters ein besonders vorteilhafter Effekt ergeben. Die abgeschiedenen Teilchen gleiten entlang dem geneigten Boden, der die Abscheidefläche darstellt, nach unten zur Abzugsöffnung hin.

Besonders günstig ist es, wenn der Boden einen Anstiegswinkel zwischen 15° und 75° vorzugsweise zwischen 30° und 60° aufweist. Auf diese Weise werden optimale Abscheideergebnisse erzielt.

Besonders begünstigte Strömungsverhältnisse im Inneren des Abscheidebehälters können dadurch erreicht werden, dass die Zuströmöffnung oberhalb der Abzugsöffnung angeordnet ist. Die auf diese Weise sich ausbildende Scherströmung begünstigt die gravitative Abscheidung von Teilchen mit einer höheren Dichte als die der flüssigen Phase.

In der Folge wird die vorliegenden Erfindung anhand der in den Figuren dargestellten Ausführungsbeispiele näher erläutert. Es zeigen:
- Fig. 1: eine erste Ausführungsvariante der Erfindung im Schnitt; und
- Fig. 2: und Fig. 3 weitere Ausführungsvarianten.

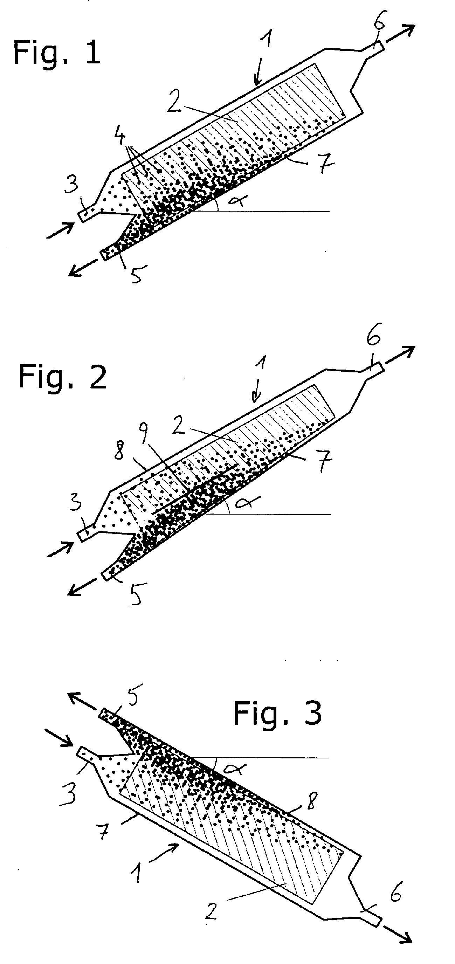

Bei der Ausführungsvariante von Fig. 1 ist ein Abscheidebehälter 1 mit einem Schallgeber 2 versehen, der an einer Seitenwand angeordnet ist. Die in den Figuren nicht sichtbare parallel gegenüberliegende Seitenwand trägt entweder ebenfalls einen mit gleicher Frequenz betriebenen Schallgeber, oder wirkt als akustischer Reflektor, um im Inneren des Abscheidebehälter 1 ein stehendes Ultraschallfeld aufzubauen. Eine zu reinigende Dispersion wird durch eine Zuströmöffnung 3 zugeführt und wird im Inneren des Abscheidebehälters 1 durch das Schallfeld agglomeriert, so dass die Abscheidung durch Schwerkraft begünstigt wird. Bei der Ausführungsvariante von Fig. 1 werden Feststoffteilchen aus einer Dispersion separiert, die eine höhere Dichte aufweisen als das flüssige Medium. Die Feststoffteilchen sind in übertriebener Größe mit 4 bezeichnet. Es ist ersichtlich, dass sich die Feststoffteilchen 4 nach unten hin anreichern und durch eine Abzugsöffnung 5 abgezogen werden können. Die von den Partikeln 4 befreite flüssige Phase kann über die Abströmöffnung 6 abgesaugt werden. Der Boden 7 des Abscheidebehälters 1 ist bei den Ausführungsvarianten von Fig. 1 und Fig. 2 als Abscheidefläche ausgebildet, an der sich lokale Gradienten der Partikelkonzentration ausbilden, die die Abscheidung begünstigen. Der Boden 7 ist in einem Winkel α von etwa 30° zur Waagrechten geneigt, um die Reibungskräfte überwinden zu können, so dass sich die Feststoffteilchen 4 zur Abzugsöffnung 5 bewegen.

Die Ausführungsvariante von Fig. 2 unterscheidet sich von Fig. 1 dadurch, dass die Deckfläche 8 in Bezug auf den Boden 7 geringfügig geneigt ist, so dass sich eine Verjüngung des Abscheidebehälters 1 zur Abströmöffnung 6 hin ergibt. Auf diese Weise können Verwirbelungen in dem Übergangsbereich zwischen Zuströmöffnung 3 und Abzugsöffnung 5 aufgrund des vergrößerten Strömungsquerschnittes verringert werden. Weiters ist bei der Ausführungsvariante von Fig. 2 im Inneren des Abscheidebehälters eine weitere innere Abscheidefläche 9 vorgesehen, die im wesentlichen parallel zum Boden 7 ausgebildet ist und sich über einen Teil der Länge des Abscheidebehälters 1 erstreckt. Bei Bedarf können auch mehrere solcher innerer Abscheideflächen 9 übereinander vorgesehen sein, um die Wirkung zu verstärken, und gegebenenfalls mehrere sinngemäß angeordnete Ein- und Ausflussöffnungen (nicht dargestellt) angebracht sein.

Die Ausführungsvariante von Fig. 3 unterscheidet sich von den obigen Ausführungsvarianten dadurch, dass die Abscheidefläche an der Deckfläche 8 ausgebildet ist, um Teilchen abscheiden zu können, deren Dichte geringer ist als die der flüssigen Phase. Dies können etwa Öltröpfchen oder Gasbläschen sein. Dementsprechend ist der Abscheidebehälter 1 im Winkel α nach unten geneigt und die Zuströmöffnung 3 liegt unterhalb der Abzugsöffnung 5.

Die vorliegende Erfindung ermöglicht es, eine wirksame Abscheidung von verschiedenen Teilchen durch kombinierte Wirkung schräger Flächen und eines Ultraschallfeldes durchzuführen.

## Patentansprüche

1. Vorrichtung zur Abscheidung von dispergierten Partikeln oder ähnlichen Teilchen (4), mit einem Abscheidebehälter (1), der mit mindestens einem Schallgeber (2) zur Erzeugung von Ultraschallwellen mit im Wesentlichen senkrecht verlaufenden Schwingungsknotenflächen versehen ist, einer Zuströmöffnung (3) für die Dispersion, einer Abströmöffnung (6) für das flüssige Medium und mit einer Abzugsöffnung (5) für die abgeschiedenen Teilchen (4), **dadurch gekennzeichnet, dass** der Abscheidebehälter (1) eine Abscheidefläche (7, 8, 9) aufweist, die in Gebrauchsstellung in einem spitzen Winkel (α) zur Horizontalen geneigt ist.

2. Vorrichtung nach Anspruch 1, **dadurch gekennzeichnet, dass** die Abscheidefläche einen Winkel (α) zwischen 15° und 75°, vorzugsweise zwischen 30° und 60° aufweist.

3. Vorrichtung nach einem der Ansprüche 1 oder 2, **dadurch gekennzeichnet, dass** die Zuströmöffnung (3) oberhalb der Abzugsöffnung (5) angeordnet ist.

4. Vorrichtung nach einem der Ansprüche 1 oder 2, **dadurch gekennzeichnet, dass** die Zuströmöffnung (3) unterhalb der Abzugsöffnung (5) angeordnet ist.

5. Vorrichtung nach einem der Ansprüche 1 bis 4, **dadurch gekennzeichnet, dass** der Abscheidebehälter (1) zwei im Wesentlichen parallele Seitenwände aufweist, von denen mindestens eine einen Schallgeber (2) trägt.

6. Vorrichtung nach einem der Ansprüche 1 bis 5, **dadurch gekennzeichnet, dass** im Inneren des Abscheidebehälters (1) weitere Abscheideflächen (9) vorgesehen sind.
